# EUROPEAN PATENT SPECIFICATION

(11) **EP 3 906 718 B1**
(45) Date of publication and mention of the grant of the patent: **01.03.2023**
(21) Application number: 20700014.2
(22) Date of filing: 02.01.2020
(51) Int. Cl.: H04W 12/30, H04W 12/40

(54) **A METHOD FOR CONNECTING A SECURE ELEMENT TO A NETWORK OF A MOBILE NETWORK OPERATOR AND CORRESPONDING SECURE ELEMENT**
VERFAHREN ZUR VERBINDUNG EINES SICHEREN ELEMENTS MIT EINEM NETZWERK EINES MOBILFUNKNETZBETREIBERS UND ENTSPRECHENDES SICHERES ELEMENT
PROCÉDÉ DE CONNEXION D'UN ÉLÉMENT SÉCURISÉ À UN RÉSEAU D'UN OPÉRATEUR DE RÉSEAU MOBILE ET ÉLÉMENT SÉCURISÉ CORRESPONDANT

(30) Priority: 04.01.2019 EP 19305012
(43) Date of publication of application: 10.11.2021
(73) Proprietor: Thales Dis France SAS, 92190 Meudon (FR)
(72) Inventor: FINE, Jean-Yves, 13881 GEMENOS CEDEX (FR); PHAN, Ly Thanh, 13881 GEMENOS CEDEX (FR)
(74) Representative: Scheer, Luc
(86) International application number: PCT/EP2020/050038
(87) International publication number: WO 2020/141198

(56) References cited:
- WO-A1-2018/141896

## Description

The present invention relates to telecommunications and proposes a method for connecting a secure element cooperating with a device to a network of a MNO (Mobile Network Operator) thanks to an ephemeral IMSI (e-IMSI).

The invention is linked to the method described in WO 2018/141896 that describes a method for transmitting an existing subscription profile from a MNO to a secure element in a cellular telecommunication network, by using only signaling messages. The purpose of the invention described in WO 2018/141896 is to charge no fees to be paid by the owner of the device nor by a MNO.

In conventional cellular telecommunication networks, a secure element, such as a UICC, an e-UICC (embedded UICC) or i-UICC (UICC integrated in a chip of a device) cooperates with the device. The device can be a handset, a smartphone, a tablet, a watch,... The secure element comprises a subscription profile (programs, files, keys, file structure,...) allowing a subscriber to enter in communication with the network of a MNO. When the device is powered on, it connects to a base station of this MNO, for accessing to Internet, handling calls,... However, in some cases, for example in the M2M domain (Machine to Machine), or loT (Internet of Things), the secure element does not contain any subscription of a MNO. It can only comprise a bootstrap application, an IMSI (International Mobile Subscriber Identity) and a key Ki. Such a situation allows for example the user of the device to choose a MNO among a plurality of operators. This solution leads to roaming costs during the profile download when the bootstrap MNO is abroad.

WO 2018/141896 proposes to use modified standardized signaling messages exchanged between a secure element and a server in order to configure remotely (over the air) this secure element without incurring any roaming costs.

The ephemeral IMSI e-IMSI is a first IMSI which MCC/MNC (Mobile Country Code / Mobile Network Code) are those of a first MNO able to provide the secure element with a second IMSI (final or permanent IMSI). This first MNO recognizes that the secure element wishes to obtain a permanent IMSI thanks to the content of the MSIN (Mobile Subscriber Identification Number) that follows the MCC/MNC codes in the IMSI (IMSI = MCC + MNC + MSIN). For that, the first MNO attributes a range of IMSIs to an operator of the system who attributes permanent IMSIs and associated credentials to secure elements containing e-IMSIs. This is the case when the final MNO is the same than the one who attributes ephemeral IMSIs. If the MNOs are different, the operator of the system has to update the HLR of the final MNO with final IMSls and associated credentials.

So, the basic idea is for a secure element to retrieve over the air at first connection the subscription to be used (IMSI & associated credentials), avoiding any pre-provisioning phase linked to geographical constraints.

For that, the system uses ephemeral IMSls which goal is to be routed through signaling of the serving PLMN (Public Land Mobile Network) to a D-HLR (Discovery Home Location Register), an HLR proxy in charge to download the relevant (and permanent) IMSI/Ki in the secure element of the device, using some fields of the AUTHENTICATION request L3 message.

L3 is the GSM signaling protocol, which is divided into three sub-layers:
- Radio Resource Management to control the setup, maintenance, and termination of radio and fixed channels, including handovers;
- Mobility Management to manage the location updating and registration procedures, as well as security and authentication; and
- Connection Management to handles general call control and manages Supplementary Services and the Short Message Service.

At first switch on, a device cooperating with a secure element comprising an e-IMSI will first find a serving network after performing the 3GPP network selection procedure and use it to register its e-IMSI, routed by the serving network to D-HLR which responds by challenging the device with an authentication token containing IMSI/Ki. The secure element decodes IMSI/Ki and aborts authentication. The ongoing registration is then aborted also.

However, in case the first serving network (VPLMN - visited PLMN) is not the one corresponding to the final subscription, this first serving network has no specific interest to help downloading a competitor's subscription, for free. So it can happen that some serving networks may try to avoid provisioning on their own resources.

In such case the less costly for the serving network is to detect e-IMSI specificity (e.g.: given MCC/MNC, range of e-IMSI) and just not answer to any registration request presenting such e-IMSI. The technical problem is that in this case the terminal will try again and again to connect to this network and the network will not relay its request. It will then be not possible to replace the e-IMSI (first IMSI) by a permanent IMSI (second IMSI).

Such e-IMSI based detection is very easy when the e-IMSI is not encrypted. In 5G, when IMSI (and more generally SUPI) encryption is used for user privacy protection, it is to be noted that such detection is still possible, as MCC and MNC codes as well as a Routing Indicator are provided in clear to the serving network (first selected network) to route the encrypted subscription identity (encrypted e-IMSI) to the home network (first MNO).

So, if a MNO detects that many registration requests with identical MCC/MNC codes and Routing Indicator are routed by his network and that after this routing nothing takes place (silence of the terminal), this MNO can block all new connection request attempts with such attributes.

The invention proposes a solution to this problem.

More precisely, the invention proposes to detect a MNO rejection mechanism (from a first selected network) and move the terminal on another network that can route the secure element to a network of a first MNO able to provide it with a permanent IMSI.

In this respect, the invention proposes a method for connecting a secure element cooperating with a device to a network of a first mobile network operator thanks to an ephemeral IMSI (e-IMSI), called first IMSI, the first IMSI being stored in the secure element, in order to get another IMSI (t-IMSI), called second IMSI, from the first mobile network operator, the method comprising:
A - Selecting by the device the radio serving network (VPLMN) after executing the 3GPP network selection procedure, called first selected network, the first selected network being not listed in the Forbidden VPLMN list (FPLMN) of the secure element;
B - Sending by the device a REGISTER REQUEST message comprising the first IMSI (e-IMSI) to the first selected network;
C - If the first selected network (VPLMN) does not route the message to the network of the first mobile network operator, stop trying to register to the first selected network (VPLMN) and put the MCC/MNC codes of the first selected network (VPLMN) in the Forbidden VPLMN list (FPLMN) of the secure element;
D - Searching by the device for a another network with the 3GPP network selection procedure to register on;
E - Repeat steps A to D until a network routes the first IMSI (e-IMSI) to the network of the first mobile network operator.

The secure element is preferably an e-UICC or an i-UICC.

Advantageously, in case steps A to E do not permit the secure element to get the second IMSI (t-IMSI), the invention proposes to send to a roaming hub mobile network operator partner having different MNC or different MCC codes from the first IMSI (e-IMSI) the REGISTER REQUEST message comprising the different MNC or different MCC codes.

The invention also concerns a secure element comprising a software comprising instructions for performing the following steps for connecting the secure element cooperating with a device to a network of a first mobile network operator thanks to an ephemeral IMSI (e-IMSI), called first IMSI, the first IMSI being stored in the secure element, in order to get another IMSI (t-IMSI), called second IMSI, from the first mobile network operator, the steps comprising:
A - Selecting by the device the radio serving network (VPLMN) after executing the 3GPP network selection procedure, called first selected network, the first selected network being not listed in the Forbidden VPLMN list (FPLMN) of the secure element;
B - Sending by the device a REGISTER REQUEST message comprising the first IMSI (e-IMSI) to the first selected network;
C - If the first selected network (VPLMN) does not route the message to the network of the first mobile network operator, stop trying to register to the first selected network (VPLMN) and put the MCC/MNC codes of the first selected network (VPLMN) in the Forbidden VPLMN list (FPLMN) of the secure element;
D - Searching by the device for a another network with the 3GPP network selection procedure to register on;
E - Repeat steps A to D until a network routes the first IMSI (e-IMSI) to the network of the first mobile network operator.

The present invention will be better understood by reading the following description of a preferred implementation of the invention.

According to the invention, a secure element like a UICC, an e-UICC or an i-UICC contains an ephemeral IMSI (e-IMSI), called first IMSI. This secure element cooperates with a device, like for example a M2M device or a smartphone.

The purpose of the e-IMSI is to be used for connecting the secure element to a network of a first mobile network operator in order to get from this first mobile network operator another IMSI (t-IMSI), called second IMSI.

In WO 2018/141896, this corresponds to step 61 of figure 8: A D-HSS receives an e-IMSI and looks up a corresponding t-IMSI to be sent back to the secure element. The secure element can then use this t-IMSI to attach to the network of a MNO having the corresponding MCC/MNC codes.

3GPP's specification TS 23.122 explains the many steps of the network selection procedure to be carried out by the secure element when it's device is first powered on (international roaming, national roaming, use or not of the OPLMN (Operator Controlled PLMN ),...).

The invention proposes to select by the device cooperating with the secure element a radio serving network (VPLMN - Visited PLMN), called first selected network, after executing the 3GPP network selection procedure. The first selected network is of course not listed in the Forbidden VPLMN list (FPLMN) of the secure element.

After this selection, the device sends a REGISTER REQUEST message comprising the first IMSI (e-IMSI) to the first selected network.

If the first selected network does not route the message to the network of the first mobile network operator, the device will stop trying to register to the first selected network and put the MCC/MNC codes of this first selected network in the FPLMN list of the secure element and the device will search for another network with the 3GPP network selection procedure to register on.

These different steps are repeated until a network routes the first IMSI to the network of the first mobile network operator.

This method thus permits to scan all available networks until one of these networks accepts to route the REGISTER REQUEST message containing the first IMSI (e-IMSI) to the network of the first MNO.

Different methods can be implemented by the VPLMNs when they have detected that an e-IMSI is used for getting for free a t-IMSI through their networks, in order not to route the REGISTER REQUEST message to its destination (first MNO). For example:
- Reject the registration request with a network error cause (e.g. network busy);
- Do not answer to the REGISTER REQUEST message;
- Provide fake tokens;
- Or in general any strategy to cancel the procedure, at lower cost.

In order to be sure that at least a network will route this REGISTER REQUEST message to the network of the first MNO, it is proposed to send to a roaming hub mobile network operator partner having different MNO or different MCC codes from the first IMSI (e-IMSI) the REGISTER REQUEST message comprising these different MNC or different MCC codes, through an available network (a clean up of the FPLMN occurs before this step in order that the device is allowed to connect to an available network).

A roaming hub mobile network operator partner is a MNO having roaming agreements with all worldwide operators, like for example Monaco Telecom^{™}. This ensures that the secure element will be able to connect to this roaming hub mobile network operator partner even if all available MNOs reject the REGISTER REQUEST message containing the e-IMSI.

For example, Monaco Telecom will then receive the REGISTER REQUEST message, look up the MSIN field, detect consequently that a second IMSI is requested by the secure element (reserved MSIN for the purpose of getting a second IMSI (t-IMSI)) and send this second IMSI to the device. The MCC/MNC codes of the first MNO are then replaced by MCC/MNC codes of Monaco Telecom (these latter codes being stored in a memory of the secure element).

The roaming hub MNO partner IMSI, say rh_IMSI, does not need to be diversified. It corresponds to a back-up IMSI that can be used if no one of the server networks accepts to forward the e-IMSI.

In the invention, the OPLMN can be left empty.

The invention also concerns a secure element comprising a software comprising instructions for performing the following steps for connecting the secure element cooperating with a device to a network of a first mobile network operator thanks to an ephemeral IMSI (e-IMSI), called first IMSI, the first IMSI being stored in the secure element, in order to get another IMSI (t-IMSI), called second IMSI, from the first mobile network operator, these steps comprising:
A - Selecting by the device the radio serving network after executing the 3GPP network selection procedure, called first selected network, the first selected network being not listed in the Forbidden VPLMN list (FPLMN) of the secure element;
B - Sending by the device a REGISTER REQUEST message comprising the first IMSI (e-IMSI) to the first selected network;
C - If the first selected network does not route the message to the network of the first mobile network operator, stop trying to register to the first selected network and put the MCC/MNC codes of the first selected network in the Forbidden VPLMN list of the secure element;
D - Searching by the device for a another network with the 3GPP network selection procedure to register on;
E - Repeat steps A to D until a network routes the first IMSI to the network of the first mobile network operator.

Preferably, the secure element stores MCC/MNC codes of a roaming hub MNO partner and, in case steps A to E do not permit the secure element to get the second IMSI (t-IMSI), the REGISTER REQUEST message comprising these MCC/MNC codes is sent to an available MNO network. A clean up of the FPLMN occurs before this step in order that the device is allowed to connect to an available network.

## Claims

1. A method for connecting a secure element cooperating with a device to a network of a first mobile network operator thanks to an ephemeral IMSI, e-IMSI, called first IMSI, said first IMSI being stored in said secure element, in order to get another IMSI, t-IMSI, called second IMSI, from said first mobile network operator, said method comprising:
A - Selecting by said device the radio serving network, VPLMN, after executing the 3GPP network selection procedure, called first selected network, said first selected network being not listed in the Forbidden VPLMN list, FPLMN, of said secure element;
B - Sending by said device a REGISTER REQUEST message comprising said first IMSI, e-IMSI, to said first selected network;
C - If said first selected network, VPLMN, does not route said message to the network of said first mobile network operator, stop trying to register to said first selected network, VPLMN, and put the MCC/MNC codes of said first selected network, VPLMN, in said Forbidden VPLMN list, FPLMN, of said secure element;
D - Searching by said device for a another network with the 3GPP network selection procedure to register on;
E - Repeat steps A to D until a network routes said first IMSI, e-IMSI, to the network of said first mobile network operator.

2. A method according to claim 1 wherein said secure element is an e-UICC or an i-UICC.

3. A method according to claims 1 or 2 wherein, in case steps A to E do not permit said secure element to get said second IMSI, t-IMSI, sending to a roaming hub mobile network operator partner having different MNC or different MCC codes from said first IMSI, e-IMSI, said REGISTER REQUEST message comprising said different MNC or different MCC codes.

4. A secure element comprising a software comprising instructions for performing the following steps for connecting said secure element cooperating with a device to a network of a first mobile network operator thanks to an ephemeral IMSI, e-IMSI, called first IMSI, said first IMSI being stored in said secure element, in order to get another IMSI, t-IMSI, called second IMSI, from said first mobile network operator, said steps comprising:
A - Selecting by said device the radio serving network, VPLMN, after executing the 3GPP network selection procedure, called first selected network, said first selected network being not listed in the Forbidden VPLMN list, FPLMN, of said secure element;
B - Sending by said device a REGISTER REQUEST message comprising said first IMSI, e-IMSI, to said first selected network;
C - If said first selected network, VPLMN, does not route said message to said network of said first mobile network operator, stop trying to register to said first selected network, VPLMN, and put the MCC/MNC codes of said first selected network, VPLMN, in said Forbidden VPLMN list, FPLMN, of said secure element;
D - Searching by said device for a another network with the 3GPP network selection procedure to register on;
E - Repeat steps A to D until a network routes said first IMSI, e-IMSI, to the network of said first mobile network operator.

5. A secure element according to claim 4 wherein said secure element is an e-UICC or an i-UICC.

6. A secure element according to claims 4 or 5 wherein, in case steps A to E do not permit said secure element to get said second IMSI, t-IMSI, sending to a roaming hub MNO partner having different MNC or different MCC codes from said first IMSI, e-IMSI, said REGISTER REQUEST message comprising said different MNC or different MCC codes.

## Patentansprüche

1. Verfahren zum Verbinden eines Secure Element, das mit einer Vorrichtung zusammenwirkt, mit einem Netz eines ersten mobilen Netzbetreibers, dank einer flüchtigen IMSI, e-IMSI, als erste IMSI bezeichnet, wobei die erste IMSI in dem Secure Element gespeichert ist, um eine andere IMSI, t-IMSI, als zweite IMSI bezeichnet, von dem ersten mobilen Netzbetreiber zu erhalten, das Verfahren umfassend:
A - Auswählen, durch die Vorrichtung, des Funkbediennetzes, VPLMN, nach einem Ausführen des 3GPP-Netzauswahlvorgangs, als erstes ausgewähltes Netz bezeichnet, wobei das erste ausgewählte Netz nicht in der verbotenen VPLMN-Liste, FPLMN, des Secure Element aufgeführt ist;
B - Senden, durch die Vorrichtung, einer REGISTRIERUNGSANFORDERUNG-Nachricht, umfassend die erste IMSI, e-IMSI, an das erste ausgewählte Netz;
C - Falls das erste ausgewählte Netz, VPLMN, die Nachricht nicht an das Netz des ersten mobilen Netzbetreibers leitet, Beenden eines Versuchens, sich bei dem ersten ausgewählten Netz, VPLMN, zu registrieren und Platzieren der MCC/MNC-Codes des ersten ausgewählten Netzes, VPLMN, in der verbotenen VPLMN-Liste, FPLMN, des Secure Element;
D - Suchen, durch die Vorrichtung, nach einem anderen Netz mit dem 3GPP-Netzauswahlvorgang, um sich dort zu registrieren;
E - Wiederholen von Schritte A bis D, bis ein Netz die erste IMSI, e-IMSI, an das Netz des ersten mobilen Netzbetreibers leitet.

2. Verfahren nach Anspruch 1, wobei das Secure Element eine e-UICC oder eine i-UICC ist.

3. Verfahren nach Anspruch 1 oder 2, wobei in den Fällen, in denen Schritte A bis E nicht zulassen, dass das Secure Element die zweite IMSI, t-IMSI, erhält, Senden an einen Roaming-Hub mobiler Netzbetreiberpartner, der unterschiedliche MNC- oder unterschiedliche MCC-Codes aufweist, von der ersten IMSI, e-IMSI, die REGISTRIERUNGSANFORDERUNG-Nachricht, umfassend die unterschiedlichen MNC- oder unterschiedlichen MCC-Codes.

4. Secure Element, umfassend eine Software, umfassend Anweisungen zum Durchführen der folgenden Schritte zum Verbinden des Secure Element, das mit einer Vorrichtung zusammenwirkt, mit einem Netz eines ersten mobilen Netzbetreibers, dank einer flüchtigen IMSI, e-IMSI, als erste IMSI bezeichnet, wobei die erste IMSI in dem Secure Element gespeichert ist, um eine andere IMSI, t-IMSI, als zweite IMSI bezeichnet, von dem ersten mobilen Netzbetreiber zu erhalten, die Schritte umfassend:
A - Auswählen, durch die Vorrichtung, des Funkbediennetzes, VPLMN, nach einem Ausführen des 3GPP-Netzauswahlvorgangs, als erstes ausgewähltes Netz bezeichnet, wobei das erste ausgewählte Netz nicht in der verbotenen VPLMN-Liste, FPLMN, des Secure Element aufgeführt ist;
B - Senden, durch die Vorrichtung, einer REGISTRIERUNGSANFORDERUNG-Nachricht, umfassend die erste IMSI, e-IMSI, an das erste ausgewählte Netz;
C - Falls das erste ausgewählte Netz, VPLMN, die Nachricht nicht an das Netz des ersten mobilen Netzbetreibers leitet, Beenden des Versuchens, sich bei dem ersten ausgewählten Netz, VPLMN, zu registrieren und Platzieren der MCC/MNC-Codes des ersten ausgewählten Netzes, VPLMN, in der verbotenen VPLMN-Liste, FPLMN, des Secure Element;
D - Suchen, durch die Vorrichtung, nach einem anderen Netz mit dem 3GPP-Netzauswahlvorgang, um sich dort zu registrieren;
E - Wiederholen von Schritte A bis D, bis ein Netz die erste IMSI, e-IMSI, an das Netz des ersten mobilen Netzbetreibers leitet.

5. Secure Element nach Anspruch 4, wobei das Secure Element eine e-UICC oder eine i-UICC ist.

6. Secure Element nach Anspruch 4 oder 5, wobei in den Fällen, in denen Schritte A bis E nicht zulassen, dass das Secure Element die zweite IMSI, t-IMSI, erhält, Senden an einen Roaming-Hub-MNO-Partner, der unterschiedliche MNC-
oder unterschiedliche MCC-Codes aufweist, von der ersten IMSI, e-IMSI, die REGISTRIERUNGSANFORDERUNG-Nachricht, umfassend die unterschiedlichen MNC- oder unterschiedlichen MCC-Codes.

## Revendications

1. Procédé de connexion d'un élément sécurisé coopérant avec un dispositif à un réseau d'un premier opérateur de réseau mobile grâce à un IMSI éphémère, e-IMSI, appelé premier IMSI, ledit premier IMSI étant stocké dans ledit élément sécurisé, afin d'obtenir un autre IMSI, t-IMSI, appelé second IMSI, à partir dudit premier opérateur de réseau mobile, ledit procédé comprenant :
A - La sélection, par ledit dispositif du réseau de desserte radio, VPLMN, après l'exécution de la procédure de sélection de réseau 3GPP, appelé premier réseau sélectionné, ledit premier réseau sélectionné n'étant pas répertorié dans la liste VPLMN interdits, FPLMN, dudit élément sécurisé ;
B - L'envoi, par ledit dispositif, d'un message de REGISTER REQUEST (demande d'enregistrement) comprenant ledit premier IMSI, e-IMSI, audit premier réseau sélectionné ;
C - Si ledit premier réseau sélectionné, VPLMN, n'achemine pas ledit message au réseau dudit premier opérateur de réseau mobile, le fait d'arrêter d'essayer de s'enregistrer audit premier réseau sélectionné, VPLMN, et la mise en place des codes MCC/MNC dudit premier réseau sélectionné, VPLMN, dans ladite liste VPLMN interdits, FPLMN, dudit élément sécurisé ;
D - La recherche par ledit dispositif d'un autre réseau avec une procédure de sélection de réseau 3GPP pour s'enregistrer ;
E - La répétition des étapes A à D jusqu'à ce qu'un réseau achemine ledit premier IMSI, e-IMSI, vers le réseau dudit premier opérateur de réseau mobile.

2. Procédé selon la revendication 1 dans lequel ledit élément sécurisé est un e-UICC ou un i-UICC.

3. Procédé selon les revendications 1ou 2 dans lequel, dans les cas où les étapes A à E ne permettent pas audit élément sécurisé d'obtenir ladite seconde IMSI, t-IMSI, l'envoi, à un partenaire d'opérateur de réseau mobile de concentrateur d'itinérance ayant différents codes MCC ou différents codes MCC dudit premier IMSI, e-IMSI, dudit message de demande d'enregistrement comprenant lesdits différents codes MCC ou codes MCC différents.

4. Elément sécurisé comprenant un logiciel comprenant des instructions pour réaliser les étapes suivantes de connexion dudit élément sécurisé coopérant avec un dispositif à un réseau d'un premier opérateur de réseau mobile grâce à un IMSI éphémère, e-IMSI, appelé premier IMSI, ledit premier IMSI étant stocké dans ledit élément sécurisé, afin d'obtenir un autre IMSI, t-IMSI, appelé second IMSI, à partir dudit premier opérateur de réseau mobile, lesdites étapes comprenant :
A - La sélection, par ledit dispositif du réseau de desserte radio, VPLMN, après l'exécution de la procédure de sélection de réseau 3GPP, appelé premier réseau sélectionné, ledit premier réseau sélectionné n'étant pas répertorié dans la liste VPLMN interdits, FPLMN, dudit élément sécurisé ;
B - L'envoi par ledit dispositif d'un message de REGISTER REQUEST (demande d'enregistrement) comprenant ledit premier IMSI, e-IMSI, audit premier réseau sélectionné ;
C - Si ledit premier réseau sélectionné, VPLMN, n'achemine pas ledit message vers ledit réseau dudit premier opérateur de réseau mobile, le fait d'essayer d'arrêter de s'enregistrer audit premier réseau sélectionné, vPLMN, et la mise en place des codes MCC/MNC dudit premier réseau sélectionné, vPLMN, dans ladite liste de VPLMN interdits, FPLMN, dudit élément sécurisé ;
D - La recherche par ledit dispositif d'un autre réseau avec une procédure de sélection de réseau 3GPP pour s'enregistrer ;
E - La répétition des étapes A à D jusqu'à ce qu'un réseau achemine ledit premier IMSI, e-IMSI, vers le réseau dudit premier opérateur de réseau mobile.

5. Élément sécurisé selon la revendication 4 dans lequel ledit élément sécurisé est un e-UICC ou un i-UICC.

6. Élément sécurisé selon les revendications 4 ou 5 dans lequel, dans les cas où les étapes A à E ne permettent pas audit élément sécurisé d'obtenir ledit second IMSI, t-IMSI, l'envoi, à un partenaire MNO de concentrateur d'itinérance ayant différents codes MCC ou différents codes MCC dudit premier IMSI, e-IMSI, dudit REGISTER REQUEST (demande d'enregistrement) comprenant lesdits différents codes MCC ou codes MCC différents.
